# EUROPEAN PATENT SPECIFICATION

(11) **EP 1 037 825 B1**
(45) Date of publication and mention of the grant of the patent: **04.09.2002**
(21) Application number: 98921956.3
(22) Date of filing: 29.04.1998
(51) Int. Cl.: B65D 90/24, F16L 55/168

(54) **APPARATUS FOR SPILL COLLECTION**
VORRICHTUNG ZUM AUFFANGEN VON ABFÄLLEN
APPAREIL DE COLLECTE DE DEVERSEMENTS ACCIDENTELS

(30) Priority: 02.05.1997 SE 9701658
(43) Date of publication of application: 27.09.2000
(73) Proprietor: Kemira Kemi AB, 251 09 Helsingborg (SE)
(72) Inventor: PALSSON, Lars, S-253 61 Helsingborg (SE); KARLSSON, Per, S-254 61 Helsingborg (SE)
(74) Representative: Wiklund, Erik
(86) International application number: SE9800797
(87) International publication number: WO98050290

(56) References cited:
- WO-A-91/17919
- WO-A-92/04574
- CH-A- 624 637

## Description

The present invention relates to an apparatus for transferring to a collecting point a medium which in case of a leakage flows out from a discharge point, said apparatus comprising a tube of a flexible material for connecting the discharge point with the collecting point, a stretching frame which is arranged at one end of the tube to form an opening, and fixing means for fixing the opening of the tube over the discharge point. More specifically the present invention concerns an apparatus which can be used, for instance, when a tank lorry or a container containing a more or less dangerous medium is ruptured.

When an accident occurs and a tank lorry overturns or is damaged in some other way, it may happen that its tank ruptures and the medium in the tank leaks out. Depending on the pressure in the tank and the properties of the medium, the medium may spurt out from the leakage point of the tank. If the medium is also dangerous to health, extensive protective equipment is necessary to make it possible for a person to approach the leakage point and, by using various devices, try to prevent the medium from leaking into the environment in a non-desirable manner.

In the above situation, it is often most important that the leakage be stopped and that the medium be somehow taken care of by, for instance, sealing the leakage point or transferring the medium to a selected collecting point. The factors affecting how quickly this can be done is the time required for rescue workers to put on safety equipment, if the medium is dangerous, and the time it takes to apply an apparatus for sealing the leakage point or transferring the medium from the leakage point to a collecting point.

The apparatus that are now available to rescue workers usually comprise a tarpaulin tube with ropes arranged in one opening of the tarpaulin tube; the ropes are to be fixed to the tank or the container that is ruptured to hold the tarpaulin tube in place. Such fixing by means of ropes is rather time-consuming and difficult, and therefore the rescue workers often come into close contact with the leaking medium. Furthermore it is not always possible to attach the ropes to the container or tank.

CH-A-624,637 discloses a collecting container and a method for fixing the same. The container comprises a foil tube which in the connecting portion has inflatable rings. The inflatable rings serve to hold the opening in the connecting portion open and to hold a possible ring with holes for attaching of ropes. Where appropriate, the ropes are used to fasten the collecting container to a tank which is ruptured. The collecting container can also be used without the ring and ropes and is in that case placed under the leakage point to collect the medium flowing out from the leakage point. The collecting container according to CH-A-624,637 suffers from the drawbacks that the attachment thereof is time-consuming and complicated and that the rescue workers are exposed to the leaking medium precisely in the manner described above.

International Publication WO 87/02650 discloses a sealing pad which is adapted to be retained against a rupture by means of vacuum. This device suffers from the drawbacks that, just like the apparatus above, it forces the rescue workers to expose themselves to the medium to be able to apply the pad to the rupture and hold the pad in place until the vacuum has built up at the contact surfaces between the pad and the ruptured tank. This may be difficult if the medium is stored in the tank at high pressure, which means that the medium spurts out from the rupture. Further the device requires access to a vacuum pump, which makes the device complicated and difficult to transport.

US-A-4,709,826 discloses an apparatus for collecting a medium escaping from the underside of a vehicle. The apparatus comprises a receptacle containing a medium-absorbing material, which is arranged, for instance, under the oil tank of a vehicle. In a preferred embodiment, the receptacle is arranged under the vehicle by means of magnets. The receptacle is adapted to be permanently fixed under a vehicle to prevent a medium, such as oil, from leaking into the environment. The receptacle has a limited collecting volume and must be exchanged at regular intervals.

International Publication WO 92/04574 discloses an apparatus and a method for sealing ruptured tanks. The apparatus comprises an aluminium backing plate having a layer of sponge rubber with a surface layer which the medium in the tank cannot penetrate. Eight peripherally arranged magnets are arranged on the backing plate. When a rupture occurs in a tank, the plate is pressed onto the rupture, whereby the sponge rubber is pressed against the rupture and stems the flow of medium. This apparatus must be specifically arranged for each tank since the sponge rubber must be adapted to the medium in the tank. This means that each tank lorry must carry an apparatus with a special sponge rubber intended for the medium contained in the tank lorry. If the rescue workers should bring these, a number of different plates with different kinds of sponge rubber would be needed, which cannot be penetrated by different types of medium.

An object of the present invention is to provide an apparatus for transferring a medium to a collecting point, which apparatus does not have the drawbacks described above.

Other objects, features and advantages of the present invention will appear from the following specification.

These objects are achieved by an apparatus according to appended claim 1. Particularly preferred embodiments are recited in the dependent claims.

In brief, the present invention relates to an apparatus for transferring to a collecting point a medium which in case of a leakage flows out from a discharge point. The apparatus comprises a tube of a flexible material for connecting the discharge point with the collecting point, a stretching frame arranged at one end of the tube to form an opening, and fixing means for fixing the opening of the tube over the discharge point. According to the invention, the stretching frame has a handle, and the fixing means comprise magnets arranged adjacent to the stretching frame.

The present invention has the advantage that it can easily and quickly be applied over a leakage point without the rescue workers having to expose themselves to any great extent to the medium escaping from the leakage point.

A further advantage of the present invention is that it allows the medium to be transferred from a ruptured container to a collecting point, which optionally may be a different container.

One more advantage is that the apparatus according to the present invention can be applied to all containers (however, made of a magnetisable material) independently of the medium in the container. Thus, the apparatus need not be adapted precisely to a special kind of medium, which makes it more universal than some of the above prior-art apparatus described above.

Preferred embodiments of the present invention will now be described with reference to the accompanying drawings. These are not to be considered to limit the scope of the present invention.

Fig. 1 is a perspective view of an embodiment of the inventive apparatus.

Fig. 2 is a perspective view of another embodiment of the inventive apparatus.

Fig. 3 is a front view of the embodiment illustrated in Fig. 2.

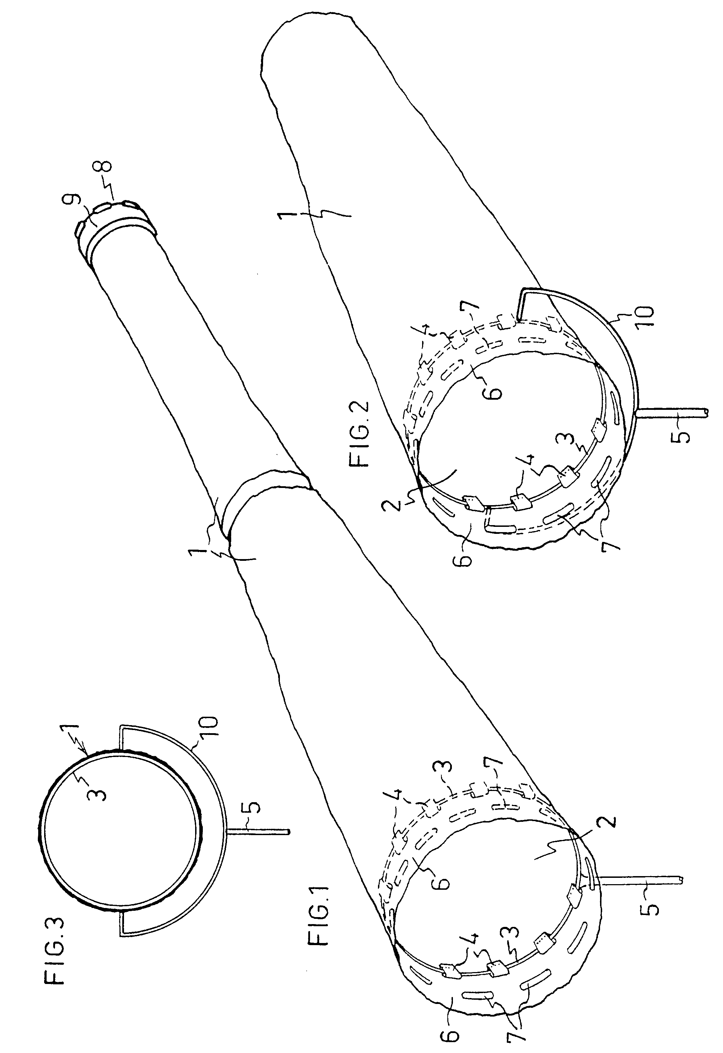

The embodiment of the inventive apparatus shown in Fig. 1 comprises a tube 1 of a flexible material, in one opening 2 of which a stretching frame 3 is arranged. By being inserted in straps 4 which are arranged round the tube 1, the stretching frame 3 keeps the opening 2 open.

The stretching frame 3 has a handle 5 to make it possible for rescue workers using the apparatus to stand at a distance and apply the device over a leakage point. In the embodiment according to Fig. 1, the tube 1 is arranged such that a sleeve 6 of the material of the tube 1 projects from the stretching frame 3, i.e. the stretching frame 3 is arranged inwardly of an outer end portion of the tube 1, said outer end portion forming the sleeve 6. The fixing means 7 in the form of magnets are arranged in the sleeve 6.

In the opening 8 of the tube 1 opposite to the stretching frame 3 a hose coupling 9 is arranged. This makes it possible to connect fire hoses or various couplings on different tank lorries and facilitates the transfer of the medium from the leakage point to a collecting point, possibly in the form of a tank lorry.

In the embodiment of the inventive apparatus as shown in Fig. 2, the handle 5 is hingedly connected to the stretching frame 3 by means of a hingedly suspended handle mounting 10 of semicircular shape with a greater radius than the stretching frame, the handle 5 being arranged on the handle mounting 10. Fig. 3 shows more clearly how the handle mounting 10 is arranged on the stretching frame 3.

The stretching frame 3 can be fixed to the tube 1 in other manners than by means of straps 4, as in Figs 1 and 2. For instance, the stretching frame 3 can be glued to the tube 1 or be inserted in a channel sewn along the circumference of the tube 1. In a further embodiment, the straps 4 can be arranged on the outside of the tube 1.

The geometric shape of the stretching frame 3 may also be varied, i.e. it need not be circular but can also have other geometric shapes.

The stretching frame 3 can also be made of a slightly resilient material so as to follow surfaces adjoining the discharge point under the action of the force of the fixing means 7 when the apparatus is applied over the discharge point. This results in a tighter connection over the leakage point.

The fixing means 7 can also be arranged directly on the stretching frame 3 with the aid of a binder or on the tube 1 adjacent to the opening 2, i.e. the fixing means 7 need not necessarily be arranged in a possible sleeve 6 as in Figs 1 and 2.

The tube 1 can have the same diameter over its entire length or decrease or increase in diameter away from the position of the stretching frame 3, thereby forming a cone.

The apparatus according to the invention has many advantages over the apparatus according to prior-art technique. It is possible to apply the apparatus quickly and easily over a leakage point. Moreover the rescue workers are to a very small extent exposed to the medium escaping from the leakage point, and the apparatus need not be specifically adapted to different kinds of medium, but can be used universally.

## Claims

1. An apparatus for transferring to a collecting point a medium which in case of a leakage flows out from a discharge point, said apparatus comprising a tube (1) of a flexible material for connecting the discharge point with the collecting point, a stretching frame (3) which is arranged at one end of the tube to form an opening, and fixing means (7) for fixing the opening of the tube over the discharge point, **characterised in that** the stretching frame (3) has a handle (5), and that the fixing means (7) comprise magnets which are arranged adjacent to the stretching frame.

2. An apparatus as claimed in claim 1, **characterised in that** the handle (5) is hingedly connected to the stretching frame (3).

3. An apparatus as claimed in claim 1 or 2, **characterised in that** the stretching frame (3) is arranged inwardly of an outer end portion of the tube (1), said outer end portion forming a sleeve (6) of the flexible material.

4. An apparatus as claimed in claim 3, **characterised in that** the magnets (7) are arranged in the sleeve (6).

5. An apparatus as claimed in any one of the preceding claims, **characterised in that** the stretching frame (3) is made of a slightly resilient material, thereby following surfaces adjoining the discharge point under the action of the force of the magnets (7) when the apparatus is applied with its one end over the discharge point.

6. An apparatus as claimed in any one of the preceding claims, **characterised in that** a hose coupling (9) is arranged at the end (8) of the tube (1) which is opposite to the stretching frame (3).

## Patentansprüche

1. Vorrichtung zum Überführen eines Mediums, das bei einer Undichtigkeit an einer Austrittsstelle ausströmt, zu einer Auffangstelle, wobei die Vorrichtung eine Röhre (1) aus einem flexiblen Material zum Verbinden der Austrittsstelle mit der Auffangstelle, einen Dehnrahmen (3), der an einem Ende der Röhre angeordnet ist, um eine Öffnung zu bilden, sowie eine Befestigungseinrichtung (7) zum Befestigen der Öffnung der Röhre über der Austrittsstelle umfasst, **dadurch gekennzeichnet, dass** der Dehnrahmen (3) einen Griff (5) aufweist, und dass die Befestigungseinrichtung (7) Magnete umfasst, die an den Dehnrahmen angrenzend angeordnet sind.

2. Vorrichtung nach Anspruch 1, **dadurch gekennzeichnet, dass** der Griff (5) gelenkig mit dem Dehnrahmen (3) verbunden ist.

3. Vorrichtung nach Anspruch 1 oder 2, **dadurch gekennzeichnet, dass** der Dehnrahmen (3) von einem äußeren Endabschnitt der Röhre (1) aus innen angeordnet ist, wobei der äußere Endabschnitt eine Muffe (6) aus dem flexiblen Material bildet.

4. Vorrichtung nach Anspruch 3, **dadurch gekennzeichnet, dass** die Magnete (7) in der Muffe (6) angeordnet sind.

5. Vorrichtung nach einem der vorangehenden Ansprüche, **dadurch gekennzeichnet, dass** der Dehnrahmen (3) aus einem leicht elastischen Material besteht, so dass er unter der Wirkung der Kraft der Magnete (7) sich an an die Austrittsstelle angrenzende Flächen anpasst, wenn die Vorrichtung mit ihrem einen Ende über der Austrittsstelle angebracht wird.

6. Vorrichtung nach einem der vorangehenden Ansprüche, **dadurch gekennzeichnet, dass** eine Schlauchkupplung (9) an dem Ende (8) der Röhre (1) angeordnet ist, das dem Dehnrahmen (3) gegenüberliegt.

## Revendications

1. Appareil destiné à transférer jusqu'à un point de collecte un fluide qui, en cas de fuite, s'écoule depuis un point de refoulement, ledit appareil comportant un tube (1) en matière flexible destiné à relier le point de refoulement au point de collecte, une armature d'extension (3) qui est disposée à une extrémité du tube afin de former une ouverture, et des moyens de fixation (7) destinés à fixer l'ouverture du tube sur le point de refoulement, **caractérisé en ce que** l'armature d'extension (3) a une poignée (5), et **en ce que** les moyens de fixation (7) comportent des aimants qui sont disposés de façon adjacente à l'armature d'extension.

2. Appareil selon la revendication 1, **caractérisé en ce que** la poignée (5) est reliée de manière articulée à l'armature d'extension (3).

3. Appareil selon la revendication 1 ou 2, **caractérisé en ce que** l'armature d'extension (3) est disposée à l'intérieur d'une partie d'extrémité extérieure du tube (1), ladite partie d'extrémité extérieure formant un manchon (6) en matière flexible.

4. Appareil selon la revendication 3, **caractérisé en ce que** les aimants (7) sont disposés dans le manchon (6).

5. Appareil selon l'une quelconque des revendications précédentes, **caractérisé en ce que** l'armature d'extension (3) est fabriquée dans une matière légèrement élastique, en suivant ainsi des surfaces rejoignant le point de refoulement sous l'action de la force des aimants (7) quand l'appareil est appliqué avec son extrémité sur le point de refoulement.

6. Appareil selon l'une quelconque des revendications précédentes, **caractérisé en ce qu'**un raccord de tuyau (9) est disposé à l'extrémité (8) du tube (1) qui est opposée à l'armature d'extension (3).
